# FASCICULE DE BREVET EUROPEEN

(11) **EP 0 566 511 B1**
(45) Date de publication et mention de la délivrance du brevet: **31.01.1996**
(21) Numéro de dépôt: 93460016.4
(22) Date de dépôt: 02.04.1993
(51) Int. Cl.: G02B 6/25, B26D 3/00

(54) **Appareil de coupe oblique d'une ou plusieurs fibres optiques**
Vorrichtung zum schrägen Schneiden von einer oder mehreren optischen Fasern
Apparatus for obliquely cutting one or more optical fibres

(30) Priorité: 14.04.1992 FR 9204891
(43) Date de publication de la demande: 20.10.1993
(73) Titulaire: FRANCE TELECOM, F-75015 Paris (FR)
(72) Inventeur: Boitel, Michel, F-22700 Perros Guirec (FR); Cailleaux, Jean-Marc, F-22300 Lannion (FR); Mahe, Thierry, F-22300 Rospez (FR)
(74) Mandataire: Le Guen, Louis François

(56) Documents cités:
- EP-A- 0 442 202
- FR-A- 2 661 635
- GB-A- 1 598 186
- PATENT ABSTRACTS OF JAPAN vol. 6, no. 88 (P-118)(966) 26 Mai 1982 & JP-A-57 024 903

## Description

La présente invention concerne un appareil de coupe oblique d'une ou de plusieurs fibres optiques ou d'un ruban de fibres optiques, appareil du type dans lequel un tranchant crée une amorce de rupture sur ladite ou lesdites fibres soumises auparavant à une torsion et à une tension.

On connaît l'intérêt que présente la coupe oblique de fibres optiques, notamment pour s'affranchir des inconvénients dûs à la réflexion de la lumière au niveau des épissures des fibres optiques.

On connaît déjà des appareils de coupe oblique et on se reportera utilement au document de brevet FR-A-2 661 635 qui décrit un tel appareil. L'appareil de cette publication comprend essentiellement une pince immobilisant la fibre en un premier point, une pince rotative pour immobiliser la fibre en un deuxième point et lui faire subir une torsion autour de son axe longitudinal, une troisième pince pour l'immobiliser, après torsion, en un troisième point situé entre le premier point et le second point, un galbe et un tranchant pour, d'une part, soumettre la fibre à une tension après l'avoir tordue et pour, d'autre part, créer une amorce de rupture dans la fibre.

Avec cet appareil, la fibre est coupée dans un état de tension et de torsion réalisant une fracture oblique de la fibre dans un plan incliné par rapport à l'axe de la fibre.

Le problème qui se pose avec ce type d'appareil est celui d'obtenir un angle de coupe reproductible avec une grande précision de l'ordre d'un degré, ceci dans une plage thermique de zéro à quarante degrés Celsius. Cette précision oblige à prévoir des appareils dont les éléments ont des dimensions elles-mêmes précises, notamment, dans le cas de l'appareil décrit ci-dessus, en ce qui concerne l'organe qui commande la torsion de la fibre.

Par ailleurs, l'appareil décrit ne permet pas la coupe de ruban de fibres dans lequel sont rangées les fibres avec un faible pas.

Le but de l'invention est donc de proposer un appareil de coupe oblique de fibres optiques qui ne présente pas les inconvénients mentionnés ci-dessus.

Pour ce faire, un appareil selon l'invention comprend un premier moyen pour serrer la ou les fibres afin de les immobiliser en amont du point de coupe, un second moyen pour serrer ladite ou lesdites fibres en aval du point de coupe, un moyen pour exercer une force de tension sur la partie de la ou des fibres entre lesdites moyens pour serrer. Il est caractérisé en ce que le second moyen est également prévu pour exercer une force de torsion sur ladite partie de fibre.

Pour ce faire, ce second moyen comprend deux mors dont l'un au moins peut se déplacer par rapport à l'autre dans une direction transversale à l'axe longitudinal de la fibre tout en exerçant une force de serrage sur ladite fibre ce qui a pour effet d'entraîner ladite fibre dans un mouvement de roulement entre lesdits deux mors et créer ainsi ladite torsion de la fibre et le début de sa mise en tension.

Selon une autre caractéristique de l'invention, le moyen pour exercer la force de tension entre en action en même temps ou après que le second moyen ait exercé sa force de torsion sur ladite partie de fibre.

Selon une autre caractéristique de l'invention, les deux mors sont mobiles l'un par rapport à l'autre dans une direction transversale par rapport à l'axe longitudinal de ladite fibre.

Selon une autre caractéristique de l'invention, l'un des deux mors est constitué d'un levier flexible, qui est soumis à l'action de moyens pour le faire fléchir entre son point de pivotement et son point de contact avec la fibre, le point de contact avec la fibre se déplaçant alors transversalement et créant ainsi ladite torsion de la fibre.

Selon une autre caractéristique de l'invention, les moyens pour faire fléchir ledit levier sont entraînés par un levier de commande qui entraîne également un galbe transversalement par rapport à l'axe longitudinal de la ou des fibres afin d'exercer ladite force de tension sur ladite partie de fibre.

Selon une autre caractéristique de l'invention, lesdits moyens pour faire fléchir ledit levier comprennent un organe de liaison pour transmettre une force sensiblement normale audit levier entre son point de contact avec la fibre et son axe de pivotement.

Selon une autre caractéristique de l'invention, ledit organe de liaison est monté sur un bras de transmission relié élastiquement audit levier de commande.

Selon une autre caractéristique de l'invention, ledit moyen de liaison est constitué d'une vis de réglage vissée dans le bras de transmission.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue schématique d'un appareil selon l'invention,
la Fig. 2 est un exemple de réalisation d'une pince d'un appareil selon l'invention,
les Figs. 3a et 3b sont des vues schématiques d'un exemple de réalisation d'un appareil selon l'invention, en aval respectivement du plan IIa/IIa et du plan IIb/IIb de la Fig. 1,
la Fig. 4 est un schéma qui montre l'utilisation de l'appareil selon l'invention pour couper plusieurs fibres,
la Fig. 5 est une vue montrant un moyen de positionnement des fibres préalablement à leur coupe, et
la Fig. 6 est une vue montrant un moyen de rattrapage des écarts de diamètres entre des fibres.

On va d'abord décrire un mode de réalisation de l'invention au moyen duquel une seule fibre peut être coupée. On verra ensuite que ce mode de réalisation peut également servir à couper plusieurs fibres, par exemple plusieurs fibres d'un ruban de fibres.

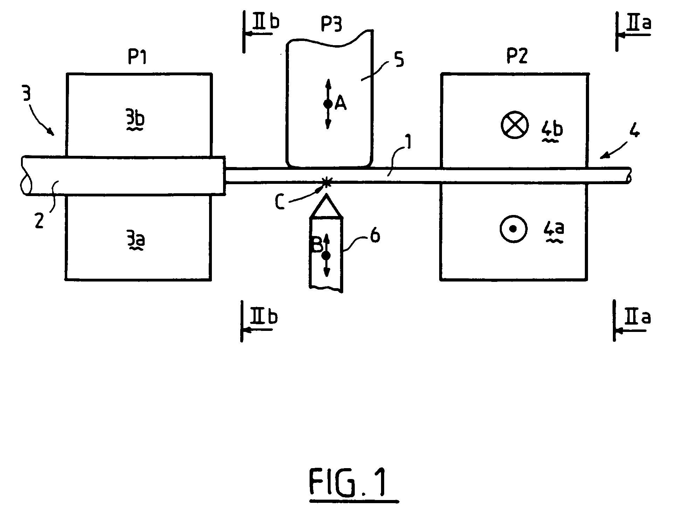

L'appareil représenté schématiquement à la Fig. 1 est destiné à couper obliquement une fibre optique 1 qui doit, pour que la coupe puisse être réalisée, être dénudée à proximité de son extrémité. Toutefois, la fibre 1 peut rester gainée sur la partie en amont du point de coupe et, en particulier, au niveau du point d'immobilisation de cette partie amont. On voit donc le gainage 2 sur cette partie amont.

L'appareil de l'invention comprend, en un premier lieu P1, un premier moyen constitué d'une pince 3 dont les deux mors 3a et 3b sont destinés à serrer la fibre 1, par exemple dans sa partie 2 non-dénudée, ceci afin de l'immobiliser.

Il comprend également, en un second lieu P2, un second moyen constitué d'une seconde pince 4 dont l'un au moins des deux mors 4a et 4b peut se déplacer par rapport à l'autre dans une direction transversale par rapport à l'axe longitudinal de la fibre 1. On a respectivement représenté, par un cercle avec une croix et par un cercle avec un point, les déplacements opposés des deux mors 4a et 4b l'un par rapport à l'autre, lorsqu'ils coulissent tous les deux. Les mors 4a et 4b de la pince 4 sont destinés à serrer la fibre 1, dans sa partie dénudée en aval du point de coupe désiré C et, par leur mouvement transversal l'un par rapport à l'autre, à provoquer 1e roulement de cette partie de la fibre 1.

Ainsi, maintenue fixe par la première pince 3 et entraînée dans un mouvement de rotation par la seconde pince 4, la fibre 1 est soumise à un effort de torsion, mais aussi, par conséquence, à une légère force de tension.

On notera que l'un des mors 4a ou 4b ou les deux mors 4a et 4b sont prévus pour pouvoir exercer une force de serrage F sur la fibre 1.

L'appareil selon l'invention comprend encore, en un troisième lieu P3 situé entre le premier lieu P1 et le second lieu P2, des moyens pour créer une tension dans la fibre 1. Ces moyens sont constitués, selon un exemple de réalisation, d'un galbe 5 mobile transversalement par rapport à l'axe longitudinal de la fibre 1 (flèche A). En exerçant une force transversale sur la partie de la fibre 1 entre les deux pinces 3 et 4, le galbe 5 met cette partie de fibre en tension.

Un tranchant 6, par exemple en diamant, est également mobile transversalement en direction du galbe 5 (flèche B). Le tranchant 6 marque la fibre 1 et crée, en un point C sur la partie de la fibre 1 entre les deux pinces 3 et 4, une amorce de rupture. Du fait que cette partie de fibre 1 est soumise, au moyen du galbe 5, à un effort de traction et, au moyen de la pince 4, à un effort de torsion, cette amorce de rupture se propage obliquement dans la fibre, provoquant la rupture de la fibre 1 selon un plan incliné d'un angle qui est fonction de l'intensité des efforts auxquels elle est soumise.

L'application de la force de serrage F sur la ou les fibres 1 et le mouvement relatif des mors 4a et 4b peuvent se faire en deux temps. Par exemple, la force F est d'abord appliquée sur la ou les fibres 1 puis, un des deux mors 4a ou 4b ou les deux mors 4a et 4b sont entraînés transversalement en translation pour pouvoir créer ce mouvement relatif.

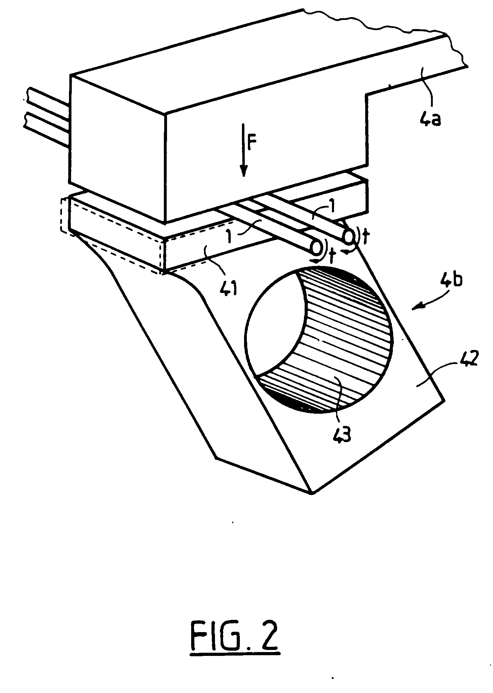

La Fig. 2 montre un mode de réalisation de la pince 4 de l'invention dans lequel, comme on le verra par la suite, l'application de la force de serrage F et le mouvement relatif des deux mors 4a et 4b sont simultanés. Selon ce mode, la pince 4 comprend le mors 4a pour pouvoir exercer la force F dirigée transversalement sur la ou les fibres 1 qui reposent sur le tablier 41 du mors 4b. Le mors 4a pourrait être, par exemple, un bras de levier. Le mors 4b est quant à lui constitué d'une poutre 42 qui est inclinée par rapport à la direction de la force de serrage F et qui est percée d'un trou 43 qui en diminue considérablement l'inertie afin de pouvoir fléchir.

Au moment du serrage de la ou des fibres 1, le mors 4b, du fait de son inclinaison et de sa faible inertie, fléchit légèrement ce qui entraîne le déplacement transversal de son tablier 41 par rapport au mors 4a qui lui est fixe à ce moment. Du fait de la force de serrage F de la ou des fibres 1 et du mouvement relatif des deux mors 4a et 4b, la ou les fibres roulent sur le tablier 41 (voir les flèches t), ce qui provoque leur torsion.

On notera que le mouvement transversal du tablier 41 peut être limité par des butées (non représentées) qui peuvent être réglables.

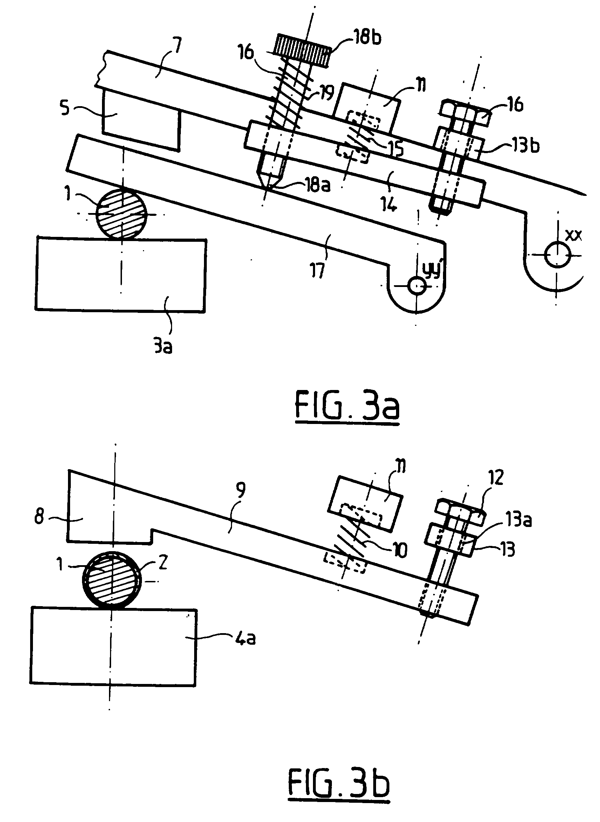

Aux Figs. 3a et 3b, on a montré un autre exemple de réalisation d'un appareil selon l'invention pour la coupe d'une seule fibre. Les Figs. 3a et 3b représentent cet appareil respectivement vu du plan IIa/IIa et du plan IIb/IIb de la Fig. 1.

Il comprend un levier de commande 7 qui est susceptible de pivoter autour d'un premier axe horizontal xx' parallèle à l'axe longitudinal de la fibre 1, et qui, dans ce mouvement de pivotement, évolue au-dessus du point C de la fibre 1 où l'on envisage d'effectuer la coupe. Il porte par ailleurs le galbe 5 destiné à mettre en tension la partie de la fibre 1 entre la pince 3 et la pince 4.

Il comprend, respectivement en aval du point de coupe (Fig. 3a) et en amont du point du coupe (Fig. 3b), des semelles 3a et 4a sur lesquelles repose la fibre 1 à couper. On remarquera qu'en amont, on a représenté la fibre 1 avec son gainage 2. Les semelles 3a et 4a sont respectivement les mors 3a et 4a de la Fig. 1.

En amont du point du coupe (Fig. 3b), on trouve un patin 8 correspondant au mors 3b de la Fig. 1. Le patin 8 est normalement au-dessus de la fibre 1 et il est pourvu d'un bras 9 relié, par l'intermédiaire d'un élément élastique, tel qu'un ressort 10, à une traverse 11 solidaire du levier 7.

Ainsi, lorsque le levier de commande 7 est abaissé, il entraîne dans son mouvement de pivotement, par l'intermédiaire du ressort 10, le bras 9. Le patin 8 est alors abaissé vers la fibre 1 et il entre en contact avec elle. En continuant l'abaissement du levier de commande 7, le ressort 10 est comprimé et sa force de rappel est transmise, via le patin 8, à la fibre 1. Celle-ci est pressée et immobilisée entre la semelle 4a et le patin 8.

Une vis 12 passant, avec un jeu assez important, dans un trou 13a d'une seconde traverse 13 solidaire du levier 7, est vissée à l'extrémité du bras 9. Elle assure le positionnement du patin 8 au-dessus de la fibre 1 quel que soit son mouvement.

En aval du point de coupe (Fig. 3a), on trouve un bras de transmission 14 relié, d'une part, élastiquement au moyen d'un ressort 15, à la traverse 11 et, d'autre part, au moyen d'une vis 16, à la traverse 13. La vis 16 est vissée à l'extrémité du bras 14 et passe, avec un jeu assez important, dans un trou 13b de la traverse 13.

Un levier flexible 17 est prévu pour pouvoir pivoter autour d'un second axe horizontal yy' parallèle à l'axe de la fibre 1. Il est destiné à presser la fibre 1 en aval du point de coupe C. Son extrémité 17a joue le rôle du mors 4b de la Fig. 1.

Un organe 18 est prévu pour transmettre la force de pivotement du levier 7 de manière sensiblement normale audit levier 17 entre son point de contact avec la fibre et son axe de pivotement yy', sensiblement au milieu du levier 17. L'organe 18 est par exemple une vis qui est vissée sur le bras de transmission 14 et qui comporte à son extrémité libre un pointeau 18a et à l'autre extrémité un organe de manoeuvre 18b. Cette vis 18 est maintenue dans sa position au moyen d'un ressort 19. Le pointeau 18a est prévu pour prendre appui sur la partie supérieure du levier 17, sensiblement en son milieu.

L'organe 18, le bras 14, et le ressort 15 constituent des moyens pour faire fléchir le levier 17 entre son point de contact avec la fibre et son axe de pivotement yy'. D'autres moyens équivalents pourraient être prévus pour soumettre le levier 17 à une pression .

Lorsqu'on abaisse le levier 7, il entraîne, dans son mouvement de pivotement, le bras de transmission 14. A un certain point, le pointeau 18a entre en contact avec le levier 17 ce qui a pour effet de créer une force de serrage sur la fibre 1. Cette force est fournie par la force de rappel du ressort 15 qui est alors compressé.

La fibre 1 est donc pressée contre la semelle 3a.

Lorsqu'on abaisse encore le levier 7, la force de rappel du ressort 15 croît, ce qui a pour effet d'accroître la force d'appui de la vis 18 sur le levier 17, entraînant alors la flexion du levier 17. Le point de contact de ce dernier avec la fibre 1 se déplace transversalement à l'axe de la fibre 1, ce qui provoque le roulement de la fibre 1 sur la semelle 3a.

Puis, l'abaissement du levier 7 continuant, le galbe 5 entre en contact avec la fibre 1 et la met en tension. On remarquera que la fibre est mise en tension en même temps ou après avoir été soumise à une torsion. L'instant où il en est ainsi est également déterminé par le réglage de la vis 18.

Plus la vis 18 est dévissée, c'est-à-dire plus longue est sa partie libre en dessous du bras 14, plus tôt elle entraîne le levier 17 et plus grand est l'angle de torsion.

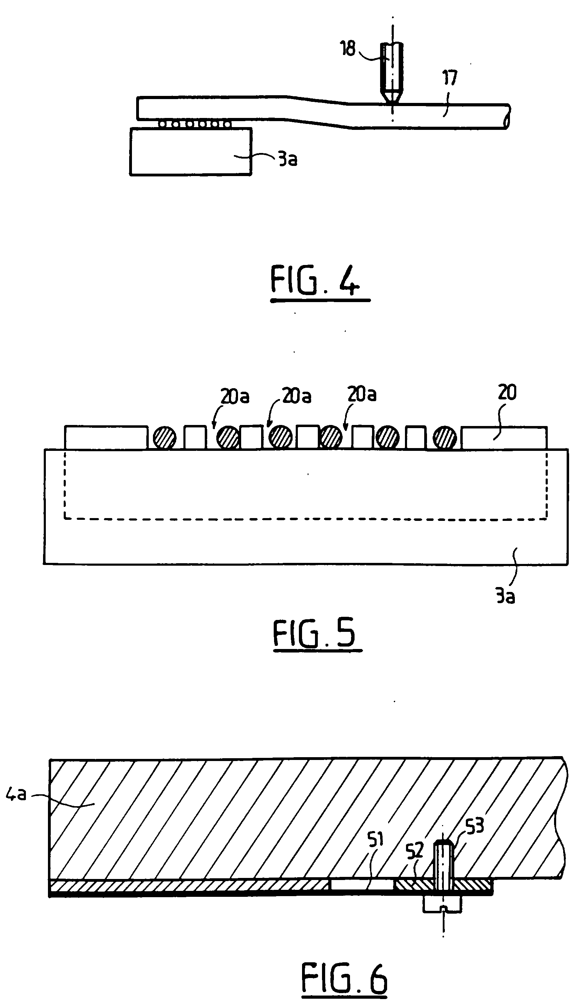

A la Fig. 4, on a représenté la semelle 3a qui porte plusieurs fibres 1, par exemple plusieurs fibres d'un ruban de fibres, ainsi que le levier flexible 17. On a également représenté l'organe 18 prévu pour exercer la force de flexion sur le levier 17 et ainsi provoquer le roulement des fibres et leur torsion.

Un contact entre les fibres dans les pinces 3 et 4 serait nuisible à leurs bonnes rotations. Aussi, on a prévu des moyens pour positionner les fibres les unes par rapport aux autres avant qu'elles soient soumises à la coupe. Ces moyens comprennent par exemple un peigne escamotable 20 constitué d'un bloc dans lequel sont creusées, parallèlement à l'axe longitudinal des fibres, des rainures 20a formant des logements destinés à recevoir lesdites fibres. Une fois les fibres en place dans le fond des rainures 20a, on escamote le peigne 20 et on coupe sur les fibres, de la manière exposée ci-dessus.

Dans le cas de plusieurs fibres 1, il peut se présenter des écarts de diamètres entre les fibres, écart qui est préjudiciable au roulement correct de chacune des fibres, notamment si les mors 4a et 4b sont massifs et durs. En effet, le mors 4a va s'appuyer sur les fibres de plus fort diamètre et le mouvement relatif des deux mors 4a et 4b aura pour conséquence la mise en torsion de ces seules fibres. Il est possible de remédier à ce problème en prévoyant une force de serrage F d'intensité suffisante pour écraser les mors 4a et 4b de et de rattraper ainsi les écarts de diamètres entre les fibres.

Une autre solution peut consister à revêtir un des deux mors ou les deux mors 4a et 4b d'une couche en matériau relativement mou et de faible épaisseur. On a par exemple utilisé avec succès des couches de papiers adhésifs ou de feuilles de mylar adhétivement mou et de faible épaisseur. On a par exemple utilisé avec succès des couches de papiers adhésifs ou de feuilles de mylar adhésives.

L'inconvénient qui résulte d'une telle solution réside dans le fait qu'elle nécessite une attention permanente de l'opérateur qui devra remplacer à temps une cale qui aura été marquée par les fibres.

On a représenté à la Fig. 6 une autre solution qui donne entière satisfaction. Le mors 4a (ou 4b) est recouvert, dans sa partie inférieure qui est destinée à se trouver en contact avec les fibres 1, d'une couche 50 dans un matériau souple. Une lame mince 51 dans un matériau dur est fixée sur le mors 4a de manière à recouvrir la couche 50. Une cale 52 peut être prévue pour rattraper la hauteur de la couche 50. La liaison de la lame 51 avec le mors 4a est assurée par des moyens 53 qui empêchent tout mouvement relatif entre le mors 4a et la lame 51.

## Revendications

1. Appareil de coupe oblique d'une ou plusieurs fibres optiques, du type où un tranchant (6) crée une amorce de rupture sur ladite fibre soumise auparavant à une torsion et à une tension, comprenant un premier moyen (3) pour serrer la ou les fibres afin de les (l')immobiliser en amont du point de coupe, un second moyen (4) pour serrer ladite ou lesdites fibres en aval du point de coupe, un moyen (5) pour exercer une force de tension sur la partie de la ou des fibres entre lesdits moyens pour serrer (3,4), caractérisé en ce que le second moyen (4) est constitué de deux mors (4a et 4b) dont l'un au moins peut se déplacer par rapport à l'autre dans une direction transversale à l'axe longitudinal de la fibre (1) tout en exerçant une force de serrage sur ladite fibre (1) ce qui a pour effet d'entraîner ladite fibre (1) dans un mouvement de roulement entre lesdits deux mors (4a et 4b) et créer ainsi ladite torsion de la fibre (1).

2. Appareil selon la revendication 1, caractérisé en ce que le moyen (5) pour exercer la force de tension entre en action en même temps ou après que le second moyen (4) ait exercé sa force de torsion sur ladite partie de fibre.

3. Appareil selon la revendication 1 ou 2, caractérisé en ce que les deux mors (4a et 4b) sont mobiles l'un par rapport à l'autre dans une direction transversale par rapport à l'axe longitudinal de ladite fibre (1).

4. Appareil selon une des revendications précédentes, caractérisé en ce qu'un mors (4a) est prévu pour exercer la force de serrage de la ou des fibres (1) qui reposent sur le tablier (41) d'un second mors (4b) qui peut fléchir de manière à créer le mouvement relatif des deux mors (4a et 4b) et la torsion de ladite ou desdites fibres (1).

5. Appareil selon la revendication 4, caractérisé en ce que le second mors (4b) est constitué d'une poutrelle (42) inclinée par rapport à la direction de la force de serrage et présentant un faible moment d'inertie de manière à pouvoir fléchir.

6. Appareil selon la revendication 1 ou 2, caractérisé en ce que l'un des deux mors (4b) est constitué d'un levier flexible (17), et en ce qu'il comporte des moyens (7, 11, 15, 14, 18) pour faire fléchir ledit levier (17) entre son axe de pivotement et son point de contact avec la fibre (1), le point de contact avec la fibre se déplaçant alors transversalement et créant ainsi ladite torsion de la fibre.

7. Appareil selon la revendication 6, caractérisé en ce que les moyens pour faire fléchir ledit levier (17) sont entraînés par un levier de commande (7) qui entraîne également un galbe (5) transversalement par rapport à l'axe longitudinal de la ou des fibres afin d'exercer ladite force de tension sur ladite partie de fibre.

8. Appareil selon la revendication 6 ou 7, caractérisé en ce que lesdits moyens pour faire fléchir ledit levier (17) comprennent un organe de liaison (18) pour transmettre une force sensiblement normale audit levier (17) entre son point de contact avec la fibre et son axe de pivotement.

9. Appareil selon la revendication 8, caractérisé en ce que ledit organe de liaison (18) est monté sur un bras de transmission (14) relié élastiquement à un levier de commande (7).

10. Appareil selon la revendication 9, caractérisé en ce que ledit moyen de liaison (18) est constitué d'une vis de réglage vissée dans le bras de transmission (14).

11. Appareil selon une des revendications précédentes, caractérisé en ce qu'il comporte des moyens (20) pour positionner préalablement à la coupe la fibre ou les fibres les unes par rapport aux autres avant d'être soumises à la coupe.

12. Appareil selon la revendication 11, caractérisé en ce que lesdits moyens comprennent un peigne escamotable (20) pourvu de rainures (20a) parallèles à l'axe longitudinal des fibres.

13. Appareil selon une des revendications précédentes, caractérisé en ce qu'au moins l'un des mors (4a et 4b) a sa face qui est destinée se trouver en contact avec les fibres (1) qui est revêtue d'une couche d'un matériau souple (50).

14. Appareil selon la revendication 13, caractérisé en ce qu'une lame (51) est fixée sur l'un au moins des mors (4a, 4b), ladite lame (51) recouvrant ladite couche (50).

## Patentansprüche

1. Vorrichtung zum schrägen Schneiden von einer oder mehreren optischen Fasern von dem Typ, bei dem eine Schneide (6) ein Durchbruchmuster auf der Faser erzeugt, die vorher einer Torsion und einer Spannung ausgesetzt wurde, enthaltend ein erstes Mittel (3) zum Straffen der Faser oder der Fasern, um diese (1) flußaufwärts zum Schneidpunkt zum Stehen zu bringen, ein zweites Mittel (4) zum Straffen der Faser oder der Fasern flußabwärts zum Schneidpunkt, ein Mittel (5) zum Ausüben einer Spannungskraft auf den Teil der Faser oder der Fasern zwischen den Mitteln (3, 4) zum Straffen, **dadurch gekennzeichnet**, daß das zweite Mittel (4) durch zwei Backen (4a und 4b) gebildet ist, von denen wenigstens eine sich relativ zu der anderen in einer Richtung senkrecht zur Längsachse der Faser (1) verschieben kann und dadurch eine Straffungskraft auf die Faser (1) ausübt, mit der Wirkung, die Faser (1) in eine Rollbewegung zwischen den beiden Backen (4a und 4b) zu versetzen und auf diese Weise die Torsion der Faser (1) zu erzeugen.

2. Vorrichtung nach Anspruch 1, **dadurch gekennzeichnet**, daß das Mittel (5) zum Ausüben der Spannungskraft zur selben Zeit oder später wirksam wird, wenn das zweite Mittel (4) seine Torsionskraft auf den genannten Teil der Faser ausgeübt hat.

3. Vorrichtung nach Anspruch 1 oder 2, **dadurch gekennzeichnet**, daß die beiden Backen (4a und 4b) in einer Richtung senkrecht zur Längsachse der Faser (1) gegeneinander bewegbar sind.

4. Vorrichtung nach einem der vorhergehenden Ansprüche, **dadurch gekennzeichnet**, daß eine Backe (4a) dafür vorgesehen ist, die Straffungskraft der Faser oder der Fasern (1) auszuüben, die auf der Ablage (41) einer zweiten Backe (4b) ruhen, die derart schwenken kann, daß die Relativbewegung der beiden Backen (4a und 4b) und die Torsion der Faser oder der Fasern (1) erzeugt werden.

5. Vorrichtung nach Anspruch 4, **dadurch gekennzeichnet**, daß die zweite Backe (4b) durch einen Balken (42) gebildet ist, der zur Richtung der Straffungskraft geneigt ist und ein geringes Trägheitsmoment gegen die Schwenkfähigkeit aufweist.

6. Vorrichtung nach Anspruch 1 oder 2, **dadurch gekennzeichnet**, daß eine der beiden Backen (4b) durch einen schwenkbaren Hebel (17) gebildet ist und daß sie Mittel (7, 11, 15, 14, 18) enthält, um den Hebel (17) zwischen seiner Schwenkachse und seinem Berührungspunkt mit der Faser (1) zu schwenken, wobei der Berührungspunkt mit der Faser sich danach in Querrichtung verschiebt und dadurch die Torsion der Faser erzeugt.

7. Vorrichtung nach Anspruch 6, **dadurch gekennzeichnet**, daß die Mittel zum Schwenken des Hebels (17) durch einen Steuerhebel (7) angetrieben sind, der ebenso ein Rundprofil (5) senkrecht zur Längsachse der Faser oder der Fasern antreibt, um die Spannungskraft auf den genannten Teil der Faser auszuüben.

8. Vorrichtung nach Anspruch 6 oder 7, **dadurch gekennzeichnet**, daß die Mittel zum Schwenken des Hebels (17) ein Verbindungsteil (18) enthalten, um eine Kraft im wesentlichen senkrecht zu dem Hebel (17) zwischen seinem Berührungspunkt mit der Faser und seiner Schwenkachse zu übertragen.

9. Vorrichtung nach Anspruch 8, **dadurch gekennzeichnet**, daß das Verbindungsteil (18) auf einem Übertragungsarm (14) befestigt ist, der elastisch mit einem Steuerhebel (7) verbunden ist.

10. Vorrichtung nach Anspruch 9, **dadurch gekennzeichnet**, daß das Verbindungsteil (18) durch eine in den Übertragungsarm (14) eingeschraubte Einstellschraube gebildet ist.

11. Vorrichtung nach einem der vorhergehenden Ansprüche, **dadurch gekennzeichnet**, daß sie Mittel (20) enthält, um vor dem Schneiden die Faser oder die Fasern relativ zu den anderen zu positionieren, bevor sie dem Schneiden unterworfen werden.

12. Vorrichtung nach Anspruch 11, **dadurch gekennzeichnet**, daß die Mittel einen versenkbaren Kamm (20) enthalten, der mit zur Längsachse der Fasern parallelen Nuten (20a) versehen ist.

13. Vorrichtung nach einem der vorhergehenden Ansprüche, **dadurch gekennzeichnet**, daß wenigstens eine der Backen (4a und 4b) an einer Fläche, die dazu bestimmt ist, sich in Berührung mit den Fasern (1) zu befinden, mit einer Schicht (50) aus einem flexiblen Material überzogen ist.

14. Vorrichtung nach Anspruch 13, **dadurch gekennzeichnet**, daß auf einer der Backen (4a, 4b) eine Platte (51) befestigt ist, die die Schicht (50) einfaßt.

## Claims

1. An apparatus for the oblique cutting of one or several optical fibers, of the type in which a cutting edge (6) starts a break on that fiber that has first been subjected to a torsion and to a tension, that comprises a first means (3) to tighten the fiber or fibers in order to immobilize it or them upstream from the cutting point, a second means (4) for tightening said fiber or fibers downstream from the cutting point, a means (5) to exert a tension force on the part of the fiber or fibers between said tightening means (3,4), characterized in that the second means (4) is formed of two clamping jaws (4a and 4b) one of which at least can move relative to the other one, in a direction transverse to the longitudinal axis of the fiber (1) while exerting a tightening force on said fiber (1), this having as a result to drive said fiber 1 into a rolling motion between said two clamping jaws (4a and 4b) and thus to create said torsion of fiber (1).

2. Apparatus according to claim 1, characterized in that the means (5) to exert the tension force comes into play at the same time as the second means (4) is exerting, or after it has exerted, its torsion force on said fiber part.

3. Apparatus according to claim 1 or 2, characterized in that the two clamping jaws (4a and 4b) are movable relative to each other in a transverse direction relative to the longitudinal axis of said fiber (1).

4. Apparatus according to one of the preceding claims, characterized in that one clamping jaw (4a) is provided to exert the force for the tightening of the fiber or fibers (1) that rest on the flat part (41) of a second clamping jaw (4b) that is capable of flexing so as to create the relative displacement of the two clamping jaws (4a and 4b) and the torsion of said fiber or fibers (1).

5. Apparatus according to claim 4, characterized in that the second clamping jaw (4b) is constituted by a small beam (42) slanted relative to the direction of the tightening force and that has a low moment of inertia so that is can be bent.

6. Apparatus according to claim 1 or 2, characterized in that one of the two clamping jaws (4b) is constituted by a flexible lever (17), and in that it comprises means (7, 11, 15, 14, 18) to cause said lever (17) to bend between its pivoting shaft and its point of contact with the fiber (1), the point of contact with the fiber then moving in the transverse direction and thus creating said torsion of the fiber.

7. Apparatus according to claim 6, characterized in that the means to cause the bending of said lever (17) are driven by a governing lever (7) that also drives along a form (5), in the transverse direction relative to the longitudinal axis of the fiber or fibers (1) in order to exert said tension force on said fiber part.

8. Apparatus according to claim 6 or 7, characterized in that said means to cause the flexion of said lever (17) comprise a connecting member (18) to transmit to the lever (17) an approximately perpendicular force, between its point of contact with the fiber and its pivoting shaft.

9. Apparatus according to claim 8, characterized in that said connecting member (18) is mounted on a transmission arm (14) elastically connected to a governing lever (7).

10. Apparatus according to claim 9, characterized in that it is constituted by a regulating screw screwed into the transmission arm (14).

11. Apparatus according to one of the preceding claims, characterized in that it comprises means (20) to position the fiber prior to the cutting, or to position the fibers relative to one another prior to the cutting.

12. Apparatus according to claim 11, characterized in that said means comprise a retractable comb (20) equipped with grooves (20a) parallel to the longitudinal axis of the fibers.

13. Apparatus according to one of the preceding claims, characterized in that at least one of the clamping jaws (4a and 4b) has its face meant to come in contact with the fibers (1) covered with a layer of flexible material (50).

14. Apparatus according to claim 13, characterized in that a blade (51) is affixed to at least one of the clamping jaws (4a, 4ab), said blade (51) covering said layer (50).
